# DEMANDE DE BREVET EUROPEEN

(11) **EP 2 450 223 A1**
(43) Date de publication de la demande: **09.05.2012**
(21) Numéro de dépôt: 11188329.4
(22) Date de dépôt: 08.11.2011
(51) Int. Cl.: B60M 3/04, B65G 1/04

(54) **Système de stockage automatisé comprenant au moins une voie de roulement équipée d'un mécanisme d'arrêt d'un chariot.**

(30) Priorité: 08.11.2010 FR 1059210
(71) Demandeur: Savoye, 21000 Dijon (FR)
(72) Inventeur: Kruger, Arnaud, 21270 VIELVERGE (FR); Ferrier, Gilles, 48160 LE COLLET DE DEZE (FR)
(74) Mandataire: Oger, Cyril Pierre

(57) **Abrégé**

L'invention concerne un système de stockage automatisé (100) comprenant au moins une voie de roulement desservant des emplacements de stockage (106), la mise en place et le prélèvement de produits (107) à l'intérieur des emplacements de stockage (106) étant assurés par l'intermédiaire d'au moins un chariot (109) se déplaçant sur ladite au moins une voie de roulement grâce à des moyens d'entraînement alimentés par au moins une ligne d'alimentation (61) en énergie associée à ladite voie de roulement et reliée à une source d'énergie électrique.

Selon l'invention, si au moins une première portion (71) de la ligne d'alimentation (61), associée à une première portion d'extrémité de la voie de roulement, est alimentée en énergie, les moyens d'entraînement sont alimentés et peuvent entraîner le chariot (109) en déplacement, sinon les moyens d'entraînement ne sont pas alimentés et ne peuvent pas entraîner le chariot (109) en déplacement.

## Description

### 1. Domaine de l'invention

Le domaine de l'invention est celui de la logistique, et en particulier celui des systèmes de stockage automatisé, notamment, mais non exclusivement, pour la préparation de colis.

Plus précisément, l'invention concerne une technique d'arrêt d'un chariot se déplaçant sur une voie de roulement d'un tel système de stockage automatisé.

### 2. Solutions de l'art antérieur

Les systèmes de préparation de colis sont plus particulièrement utilisés dans les entreprises d'expédition et de vente à distance de produits de petit volume. Les principaux exemples d'utilisateurs de ces systèmes automatisés de préparation de colis sont les fournisseurs de matériel de bureau, de vêtements, de produits cosmétiques, d'outillage ou de pièces détachées dans l'industrie mécanique. Ces systèmes permettent de préparer avec un minimum de main-d'oeuvre, dans un délai court et avec un suivi précis des stocks, un colis correspondant à une commande précise d'un client, cette commande portant sur plusieurs produits en différentes quantités, chacun des produits avec sa quantité étant identifié par une ligne de commande.

Un exemple d'un tel système automatisé est décrit dans la demande de brevet FR 2 915 979 déposée par la demanderesse. Ce système comprend un magasin de stockage automatisé comprenant une pluralité de niveaux de rangements superposés dans lesquels des dispositifs de transfert autonomes (également appelés chariots de collecte et de transport ou navettes) assurent le déplacement des produits, pour leur mise en place à l'intérieur d'emplacements de stockage et pour leur prélèvement depuis ces emplacements, ces chariots pouvant non seulement se déplacer horizontalement à un niveau donné, mais aussi être amenées d'un niveau à un autre par des élévateurs. Le magasin de stockage comprend des ensembles de rangement, chaque ensemble de rangement étant formé de deux étagères de stockage (ou rayonnages) disposées de part et d'autre d'une allée, cette allée recevant, à chaque niveau de rangement, des voies pour le déplacement horizontal d'un chariot et un élévateur étant disposé à une extrémité de l'allée. Une voie est généralement formée de deux rails parallèles et le chariot est équipé de roues pour se déplacer sur ces rails .

Les objets stockés dans le magasin sont disposés dans des contenants, qui sont éventuellement posés sur un plateau. Comme décrit dans la demande de brevet FR 2 915 977 déposée par la demanderesse, le chariot comprend une zone de réception de ce plateau et un moyen de transfert de ce plateau pour le déplacer d'un emplacement de stockage du magasin vers la zone de réception et réciproquement.

Comme décrit dans la demande de brevet FR 2 915 932 déposée par la demanderesse, les chariots peuvent être équipés de super-condensateurs qui alimentent leurs moteurs et équipements électriques internes.

Toutefois, l'autonomie de tels super-condensateurs est limitée. De ce fait, des zones de recharge reliées à une alimentation électrique sont prévues sur les élévateurs et en extrémité d'allée à proximité des élévateurs, chaque chariot exploitant les temps d'attente à ces endroits pour recharger ses batteries de super-condensateurs. Ce temps nécessaire au rechargement des super-condensateurs équipant les chariots limite, par conséquent, les cadences de prises et déposes de contenants par les chariots et limite l'optimisation du temps de préparation des commandes de produit.

Une solution consisterait à augmenter la capacité des batteries des super-condensateurs. Toutefois, une telle solution nécessiterait un temps de charge plus long et limiterait également l'optimisation du temps de préparation des commandes de produit.

Une autre solution consisterait à multiplier les points de recharge électrique au sein du magasin de stockage et à chaque niveau du magasin. Il est évident qu'une telle solution est non seulement complexe à mettre en oeuvre mais aussi coûteuse.

Pour ces raisons, il a été envisagé d'assurer l'autonomie de déplacement des chariots en utilisant des rails conducteurs disposés le long des voies de roulement et reliés à une source d'énergie électrique, l'équipement électrique d'un chariot étant relié électriquement à un ou plusieurs de ces rails conducteurs.

On notera que, même lorsque une commande d'arrêt est transmise par le système de gestion centrale du magasin à un chariot équipé de batteries ou alimenté électriquement par un ou des rails conducteurs, le chariot continue à se mouvoir sur une certaine longueur de la voie de roulement du fait de son inertie. Une butée mécanique est prévue aux extrémités de chaque voie de roulement de façon à freiner et stopper le déplacement d'un chariot en extrémité d'allée.

Classiquement, une butée fixe est prévue à l'extrémité opposée de la voie de roulement à celle où est positionné l'élévateur et une butée escamotable est prévue à l'autre extrémité de la voie de roulement du côté de l'élévateur, cette butée étant active (c'est-à-dire abaissée) par défaut. La plateforme de l'élévateur est elle équipée d'un vérin pneumatique. Lorsque la plateforme est positionnée face à un niveau des étagères de stockage, la tige du vérin sort du corps du vérin et vient actionner un piston (appartenant à l'ensemble butée escamotable) qui, par l'intermédiaire de biellettes de renvoi, permet d'escamoter (c'est-à-dire de désactiver) la butée. L'escamotage de la butée laisse le passage libre à la circulation du chariot entre la voie de roulement et la plateforme de l'élévateur, et réciproquement. Inversement, la rentrée de la tige du vérin permet d'abaisser la butée (c'est-à-dire l'activer). En d'autres termes, c'est la présence de l'élévateur qui permet d'escamoter la butée.

Un inconvénient d'une telle solution est qu'elle nécessite un système pneumatique pour alimenter le vérin de la plateforme de l'élévateur destiner à (dés)activer la butée. Elle est donc peu économique.

En outre, l'actionnement de la tige du vérin nécessite l'arrêt complet de la plateforme de l'élévateur. Le déroulement de l'opération d'escamotage de la butée nécessite par conséquent un certain temps (de l'ordre de 2 secondes) au détriment du temps de cycle et de la cadence.

Par ailleurs, les commandes de déplacement et d'arrêt d'un chariot étant transmises par le système de gestion centrale du magasin via un protocole de communication sans fil, du type Wi-Fi (marque déposée) par exemple, un éventuel dysfonctionnement de la communication ne permet pas la transmission d'une commande d'arrêt d'urgence vers un chariot qui continue dès lors à se déplacer sur les voies de roulement, jusqu'à venir en contact avec une butée mécanique. Le chariot pousse contre cette butée jusqu'à l'épuisement de ses batteries de super-condensateurs. On comprend qu'un tel scénario n'est pas souhaitable pour des raisons de sécurité et pour éviter toute dégradation de la butée mécanique et/ou du moteur du chariot.

Une solution envisagée a été de remplacer la source d'énergie pneumatique par une source électrique. Cette solution, qui consiste à remplacer le vérin de la plateforme de l'élévateur par un moteur électrique actionnant la butée mécanique, permet de rationnaliser les différents types de câblage par l'utilisation d'une seule source d'énergie. Toutefois, cette solution présente l'inconvénient de ne pas réduire suffisamment le principal centre de coûts lié à la partie mécanique du système de butée.

### 3. Objectifs de l'invention

L'invention a notamment pour objectif de pallier ces inconvénients de l'art antérieur.

Plus précisément, un objectif d'au moins un mode de réalisation de l'invention est de proposer un système d'arrêt d'un chariot sur une voie de roulement d'un entrepôt de stockage et/ou de préparation logistique qui soit :
- simple à mettre en oeuvre,
- économique, et
- fiable.

Un autre objectif d'au moins un mode de réalisation de l'invention est de mettre en oeuvre une solution qui permette d'optimiser le temps de préparation des commandes de produit.

L'invention, dans au moins un mode de réalisation, a encore pour objectif d'optimiser le passage d'un chariot vers un élévateur desservant différents niveaux d'un entrepôt de stockage et/ou de préparation logistique.

### 4. Caractéristiques essentielles de l'invention

Ces objectifs, ainsi que d'autres qui apparaîtront par la suite, sont atteints à l'aide d'un système de stockage automatisé comprenant au moins une voie de roulement desservant des emplacements de stockage, la mise en place et le prélèvement de produits à l'intérieur des emplacements de stockage étant assurés par l'intermédiaire d'au moins un chariot se déplaçant sur ladite au moins une voie de roulement grâce à des moyens d'entraînement alimentés par au moins une ligne d'alimentation en énergie associée à ladite voie de roulement et reliée à une source d'énergie électrique.

Selon l'invention, au moins une première portion de la ligne d'alimentation, associée à une première portion d'extrémité de la voie de roulement, est reliée ou non à ladite ou à une autre source d'énergie électrique par des premiers moyens de commutation, de sorte que, quand le chariot est présent dans la première portion d'extrémité de la voie de roulement : si la première portion de la ligne d'alimentation est alimentée en énergie, les moyens d'entraînement sont alimentés et peuvent entraîner le chariot en déplacement, sinon les moyens d'entraînement ne sont pas alimentés et ne peuvent pas entraîner le chariot en déplacement.

Ainsi, l'invention repose sur une approche tout à fait nouvelle et inventive dans laquelle le ou les lignes d'alimentation en énergie (qui peuvent prendre la forme d'un rail conducteur par exemple) d'un chariot situé sur une voie de roulement d'un magasin de stockage comprennent un ou plusieurs tronçons qui selon les cas, sont reliés ou non à une source d'énergie électrique, chaque tronçon de ligne d'alimentation étant situé au voisinage d'une extrémité de la voie de roulement correspondante.

Le ou les lignes d'alimentation en énergie sont de préférence des lignes d'alimentation électrique ou magnétique auxquels est relié, avec ou sans contact, respectivement un chariot équipé d'au moins un moteur entraînant des roues de déplacement du chariot sur les voies de roulement.

Le ou les lignes d'alimentation en énergie sont disposées le long d'une voie de roulement d'un niveau, sur toute la longueur de la voie de roulement.

Lorsque ce ou ces tronçons de ligne d'alimentation ne sont pas alimentés électriquement, ils constituent une « butée électrique » ou « butée virtuelle », c'est-à-dire qu'un chariot ne peut être entraîné en déplacement sur la voie de roulement associée à ce ou ces tronçons.

En effet, l'équipement électrique du chariot, et notamment son ou ses moteurs, n'étant plus alimenté électriquement sur ces tronçons de ligne d'alimentation, le moteur n'est plus entraîné et le chariot va s'arrêter de lui-même sur ce tronçon après avoir parcouru une distance d'arrêt, qui est notamment fonction de sa vitesse, une fois qu'il a pénétré ce tronçon.

Lorsque ce ou ces tronçons de ligne d'alimentation sont alimentés électriquement, le chariot peut être entraîné en déplacement sur ces tronçons.

En d'autres termes, contrairement à l'art antérieur où l'arrêt des chariots en extrémité des allées est assuré par une butée mécanique, on prévoit, dans le cadre de l'invention, une ou plusieurs zones d'arrêt des chariots, de longueurs prédéterminées, qui ne permettent pas, lors des cycles de prise et dépose de contenants de produits, l'alimentation électrique d'un chariot et qui provoquent la décélération et l'arrêt du chariot.

Ainsi, lors des cycles de prise et dépose de contenants de produits, si un chariot venait à s'égarer ou bien si le système informatique de gestion centrale des chariots perdait le contrôle d'un chariot, ce dernier entrerait dans une de ces zones non conductrices et les collecteurs de courants du chariot seraient dès lors en contact avec une ligne d'alimentation non alimentée qui ne permettrait plus au chariot de se déplacer.

Le déplacement des chariots n'est donc plus dépendant de la quantité électrique embarquée par ces dernières, dans des batteries de super-condensateurs notamment.

La longueur de la portion de ligne d'alimentation servant de « butée électrique » ou de zone d'arrêt des chariots est choisie de façon à ce qu'un chariot qui entrerait sur une telle portion à pleine vitesse puisse être complètement arrêtée sur cette portion, si cette portion de ligne d'alimentation n'est pas alimentée électriquement.

En outre, ces portions de ligne d'alimentation servant de «butée électrique » ou de zone d'arrêt des chariots sont situées aux extrémités des lignes d'alimentation (et donc des voies de roulement) et sont distinctes des portions restantes de ligne d'alimentation permettant le déplacement des chariots pour la prise et la dépose de contenants de produits sur les rayonnages.

Une telle solution est fiable et économique.

Dans un mode de réalisation particulier, le chariot comprend des moyens de freinage qui sont actifs lorsqu'ils ne sont pas alimentés par ladite au moins une ligne d'alimentation, de sorte que, quand le chariot est présent dans la première portion de la voie de roulement : si la première portion de la ligne d'alimentation est alimentée en énergie, les moyens de freinage sont inactifs, sinon les moyens de freinage sont actifs.

Afin de limiter la longueur de ligne d'alimentation nécessaire à l'arrêt en urgence d'un chariot, on peut prévoir un système de freinage des roues du chariot - avec ressort de rappel par exemple- qui est activé lorsque le chariot n'est pas alimenté par la ligne d'alimentation associée à la voie de roulement du chariot. Par conséquent, lorsqu'un chariot pénètre une portion de ligne d'alimentation servant de « butée électrique » et que l'alimentation du chariot (et notamment de son moteur) est interrompue, le système de freinage est activé, permettant une décélération du chariot. Inversement, lorsque le chariot est alimenté, le système de freinage est désactivé, permettant le déplacement du chariot sur la voie de roulement.

Un tel système de freinage peut être un frein de parking qui est monté sur le moteur par absence de courant, et qui est débrayable manuellement éventuellement.

Dans une variante, les chariots ne comprennent pas de système de freinage.

Avantageusement, des moyens isolants sont situés entre ladite première portion de ladite ligne d'alimentation et une deuxième portion de ladite ligne d'alimentation associée à une deuxième portion de la voie de roulement, et lesdites première et deuxième portions de ladite ligne d'alimentation sont reliées entre elles par lesdits premiers moyens de commutation.

Ainsi, les portions de ligne d'alimentation en énergie servant de « butée électrique » sont isolées électriquement des portions adjacentes de ligne d'alimentation en énergie qui sont reliées à une source d'énergie électrique lorsque le système automatisé est en fonctionnement. Pour ce faire, on insère un isolant électrique (en plastique, céramique ou verre par exemple) entre ces portions de ligne d'alimentation en énergie. Une telle solution est relativement aisée à mettre en oeuvre

On prévoit en outre que les portions de ligne d'alimentation en énergie servant de « butée électrique » puisse être reliées ou non aux portions de ligne d'alimentation en énergie adjacentes.

Cette approche est avantageuse car elle ne nécessite qu'une source d'énergie électrique.

Dans une alternative, les moyens de commutation relient les portions de ligne d'alimentation servant de « butée électrique » et une source d'énergie électrique distincte de celle alimentant les portions de ligne d'alimentation adjacentes. Dans ce cas, l'homme du métier prendra les mesures nécessaires pour rendre compatibles électriquement, en tension et en phase notamment, les portions de ligne d'alimentation servant de « butée électrique » et les portions de ligne d'alimentation adjacentes lorsque ces portions sont alimentées électriquement par leur source distincte.

Dans un autre mode de réalisation particulier de l'invention, le système comprend au moins un ensemble de rangement comprenant une allée donnant accès, d'un côté ou de chaque côté, à une étagère de stockage constituée d'une pluralité de niveaux de rangement superposés, chaque niveau étant subdivisé en emplacements de stockage, une voie de roulement équipant chaque niveau de rangement, ledit au moins un ensemble de rangement comprenant des moyens élévateurs de chariot pouvant amener ledit au moins un chariot d'un niveau à un autre, lesdits premier moyens de commutation étant commandés au moins en partie par des moyens de pilotage situés au moins en partie sur lesdits moyens élévateurs de chariot.

Ainsi, dans le cas où l'ensemble de stockage comprend plusieurs niveaux de rangement superposés équipés chacun d'une voie de roulement qui est associée à au moins une ligne d'alimentation en énergie, on prévoit des moyens élévateurs de chariot. Ces moyens élévateurs de chariot comprennent une plateforme équipée d'une voie de roulement et d'une ligne d'alimentation en énergie qui sont alimentés électriquement lorsque le système automatisé est en fonctionnement ou, à tout le moins, lorsque les moyens élévateurs de chariot se déplacent. Cette plateforme est destinée à recevoir un chariot, vide ou chargée d'un contenant de produits et à la transférer d'un niveau à un autre des rayonnages. Une fois positionnés à un niveau des rayonnages, les moyens élévateurs commandent l'alimentation, par activation des moyens de commutation, des portions de ligne d'alimentation de ce niveau qui servent de zone d'arrêt des chariots. Une fois que la portion de ligne d'alimentation servant de zone d'arrêt des chariots est alimentée électriquement, le déplacement d'un chariot le long de ces portions servant de zone d'arrêt des chariots, puis sur la plateforme des moyens élévateurs, est rendu possible.

Le même principe s'applique lorsqu'un chariot chargé sur un élévateur de chariot doit être transférée de la plateforme de l'élévateur de chariot vers un niveau du rayonnage.

On dissocie donc le fonctionnement du chariot dans les rayonnages (lors des cycles de prise/dépose des contenants de produits) du passage du chariot sur la plateforme de l'élévateur de chariot.

La mise en oeuvre de moyens de commutation électrique est particulièrement avantageuse en ce sens qu'elle permet d'augmenter les cadences du système (on entend par cadence le nombre de cycles/heure, soit le nombre de plateaux ou contenants sortis des rayonnages et rentrés dans les rayonnages en une heure) par rapport aux systèmes mettant en oeuvre des butées mécaniques.

Selon un autre mode de réalisation particulier de l'invention, lesdits premier moyens de commutation sont pilotés au moins en partie par des moyens de gestion centrale dudit système.

On utilise donc le système informatique de gestion centrale, qui gère notamment la liste de commande associée à chaque colis et les chariots, pour piloter les moyens de commutation et alimenter, ou non, le ou les portions de ligne d'alimentation servant de zone d'arrêt des chariots. Une telle solution qui utilise l'existant est donc particulièrement économique.

De façon avantageuse, pour au moins un niveau de rangement donné, les moyens de pilotage comprennent des moyens d'émission d'un signal de commande, situés sur lesdits moyens élévateurs, et des moyens de détection dudit signal de commande, situés à proximité de la première portion d'extrémité de la voie de roulement dudit niveau de rangement donné, lesdits moyens d'émission étant activés lorsque les moyens élévateurs de chariot sont situés sensiblement en face dudit niveau de rangement donné.

On commande ainsi, pour un niveau particulier des rayonnages, l'alimentation en énergie électrique des portions de ligne d'alimentation servant de zone d'arrêt des chariots qui sont situées à l'extrémité de la ligne d'alimentation (et donc de la voie de roulement) du côté de l'élévateur de chariot, en équipant:
- la plateforme avec des moyens qui permettent l'émission d'un signal de commande, un signal optique par exemple, et
- les rayonnages, de préférence à proximité du niveau concerné, avec des moyens de détection (et donc de réception) du signal de commande.

Dès qu'un signal de commande est reçu, les moyens de détection commandent la fermeture des moyens de commutation qui permettent alors de relier les portions de ligne d'alimentation servant de zone d'arrêt des chariots avec une source d'alimentation électrique.

Cette mise en oeuvre nécessite peu de temps de communication entre les moyens d'émission et les moyens de détection, comparé notamment à l'alternative qui nécessite l'envoi d'un signal entre les moyens de gestion centrale du système automatisé et les moyens de commutation, une fois que le positionnement de l'élévateur de chariot en face de la voie de roulement est détecté par les moyens de détection et que ces derniers ont envoyé un signal de détection aux moyens de gestion centrale. Toutefois, cette alternative permet de sécuriser davantage la mise en oeuvre.

Dans un mode de réalisation particulier, la première portion de ligne d'alimentation est alimentée en énergie pendant un délai prédéterminé après que les moyens élévateurs de chariot ne sont plus situés sensiblement en face dudit niveau de rangement donné.

La mise en oeuvre d'une temporisation permet de continuer à alimenter en énergie la portion de ligne d'alimentation d'une voie de roulement servant de zone d'arrêt des chariots pendant un laps de temps prédéterminé, une fois que l'élévateur de chariot s'est déplacé et n'est plus en face de la voie de roulement. Du fait que cette portion de ligne d'alimentation est alimentée, le chariot peut se déplacer et quitter cette zone d'arrêt.

Dans une alternative, l'élévateur ne peut repartir que lorsque la portion de ligne d'alimentation servant de zone d'arrêt des chariots n'est plus alimentée et que le chariot n'est plus situé sur cette zone d'arrêt. Toutefois, la cadence obtenue avec une telle alternative est inférieure à celle de la solution précédente.

De façon optionnelle, ledit au moins un ensemble de rangement comprend des moyens élévateurs de chariot situés à chaque extrémité de l'allée, et, pour au moins un niveau de rangement donné, une deuxième portion de la ligne d'alimentation associée à une deuxième portion d'extrémité de la voie de roulement, est reliée ou non à ladite ou à une autre source d'énergie électrique par des deuxièmes moyens de commutation.

Ainsi, on peut prévoir un élévateur de chariot à chaque extrémité d'une allée, chaque extrémité de la ligne d'alimentation de cette allée comprenant une portion de ligne d'alimentation servant de zone d'arrêt du chariot déplaçable sur la voie de roulement. Une telle mise en oeuvre permet d'augmenter les cadences.

De manière avantageuse, pour au moins un niveau de rangement donné, deux chariots sont prévus sur ledit niveau de rangement donné.

On peut optimiser davantage les cadences en prévoyant sur chaque niveau deux chariots, chacun de ces chariots étant associé à un système élévateur de chariot et desservant, par exemple, une moitié d'un niveau de rayonnage.

Dans un autre mode de réalisation particulier, une troisième portion de la ligne d'alimentation, associée à une troisième portion de la voie de roulement, est reliée ou non à ladite ou à une autre source d'énergie par des troisième moyens de commutation, ladite troisième portion de la voie de roulement étant située entre les première et deuxième portions d'extrémité de la voie de roulement.

Dans le cas où un premier chariot dessert une première moitié d'un niveau de rayonnage et un deuxième chariot dessert une deuxième moitié d'un niveau de rayonnage, on prévoit non seulement une première portion d'extrémité de ligne d'alimentation servant de zone d'arrêt du premier chariot à proximité d'une première extrémité de la ligne d'alimentation (et donc de la voie de roulement), et une deuxième portion d'extrémité de la ligne d'alimentation servant de zone d'arrêt du deuxième chariot à proximité d'une deuxième extrémité de la ligne d'alimentation (et donc de la voie de roulement), mais aussi une troisième portion intermédiaire de la ligne d'alimentation servant de zone d'arrêt du premier et du deuxième chariot. Cette troisième portion intermédiaire est située, par exemple, sensiblement à égale distance des première et deuxième extrémités de la ligne d'alimentation (et donc de la voie de roulement), cette troisième portion intermédiaire permettant d'éviter que le premier ou le deuxième chariot se déplace sur la zone de déplacement de l'autre chariot du même niveau (de préférence, cette portion intermédiaire ne dessert pas d'emplacement de stockage de produits).

### 5. Liste des figures

D'autres caractéristiques et avantages de l'invention apparaîtront plus clairement à la lecture de la description suivante d'un mode de réalisation préférentiel, donné à titre de simple exemple illustratif et non limitatif, et des dessins annexés, parmi lesquels :
- la figure 1 représente de manière schématique une vue de dessus d'un magasin de stockage automatisé dans lequel peut être mise en oeuvre la technique de l'invention ;
- la figure 2 est un schéma électrique du principe de l'invention selon un mode de réalisation.

### 6. Description d'un mode de réalisation de l'invention

### 6.1 Système automatisé de préparation de colis

Un système automatisé de préparation de colis dans lequel est mise en oeuvre l'invention est, par exemple, situé dans un entrepôt de stockage et de préparation logistique et est décrit dans une demande de brevet déposée concomitamment au nom de la demanderesse.

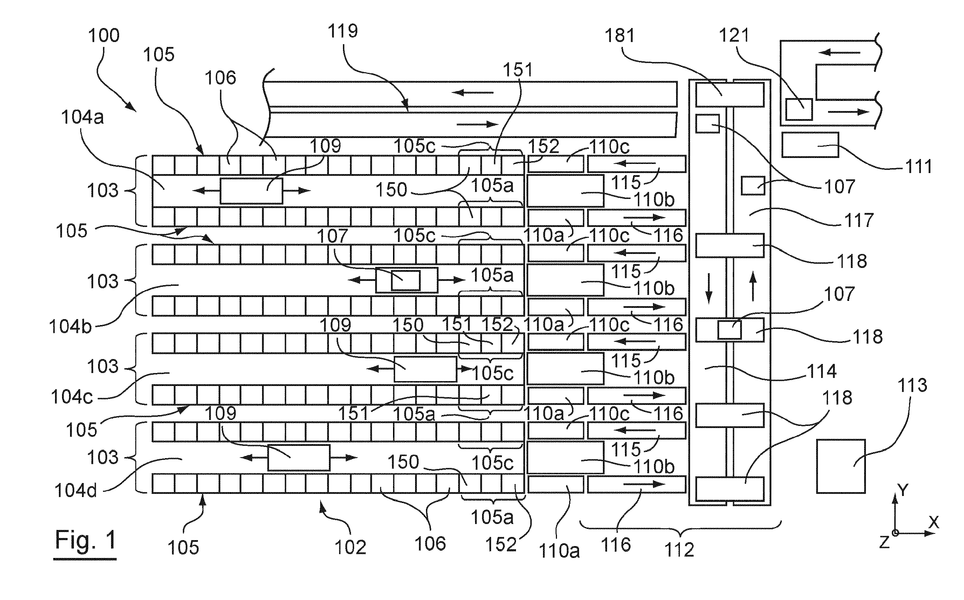

Comme représenté sur la figure 1, ce système automatisé 100 de préparation de colis 121 comprend un magasin de stockage 102 se présentant comme une structure de forme générale parallélépipédique, dont les dimensions en longueur, largeur et hauteur sont déterminées en fonction du volume de stockage souhaité et de la taille de l'entrepôt.

Ce magasin 102 comporte quatre ensembles de rangement 103, définissant quatre allées parallèles 104a, 104b, 104c, 104d, de part et d'autre desquelles sont disposées des étagères de stockage ou rayonnages, toutes désignées indistinctement par la référence 105, et dont les dimensions sont fonction des caractéristiques des produits à stocker et du nombre de produits à stocker par étagères. Chaque étagère de stockage 105 comprend plusieurs niveaux de rangement superposés. Les emplacements de stockage des étagères de stockage 105 sont destinés à accueillir chacun un ou plusieurs contenants (stockage multi-profondeur).

Une telle structure tridimensionnelle est réalisée, de manière connue, par assemblage de montants, lisses et traverses. Elle se définit selon trois axes géométriques, à savoir :
- l'axe X, qui est l'axe des allées et des étagères de stockage, appelé axe longitudinal du magasin ;
- l'axe Y qui est l'axe transversal du magasin, correspondant à l'axe d'introduction des contenants dans les emplacements de stockage des étagères, et
- l'axe Z qui est l'axe vertical.

Chaque niveau de rangement de chaque allée 104a, 104b, 104c, 104d comporte deux rails parallèles 108 formant une voie de roulement orientée selon l'axe longitudinal X du magasin pour le déplacement d'un chariot de collecte et de transfert 109. On notera que le nombre de chariots par allée peut varier de 1 à n (dans le cas où on prévoit une chariot par niveau), où n correspond au nombre de niveaux des étagères de rangement, et de 2 à 2n (dans le cas où on prévoit deux chariots sur au moins un niveau).

Le système 100 comprend également un poste de prélèvement 111, un ensemble 112 de convoyeurs (constitués des convoyeurs 114, 115, 116, 117, 118, 119, 181) montés au sol et un système informatique de gestion centrale 113.

Au niveau du poste de prélèvement 111 (on peut prévoir plusieurs postes de prélèvement), un opérateur prépare un colis 121 en y plaçant la quantité désirée de produits, déterminée par la liste de commande associée au colis. Le poste de prélèvement 111 comporte à cette fin des moyens de signalisation visuels ou sonores, par exemple un écran, indiquant à l'opérateur la quantité de produit à prélever dans le contenant 107 présent au poste de prélèvement 111. On voit bien l'avantage apporté par ce dispositif qui simplifie la tâche de l'opérateur et permet un gain de temps à la préparation du colis.

Chaque allée comporte un niveau d'entrée E et/ou de sortie S (non représentés sur cette figure) du magasin 102 pour les contenants 107 de produits. L'entrée et la sortie des contenants 107 peuvent se faire à un même niveau ou à des niveaux différents, selon la configuration du système.

Les convoyeurs 114 à 118 amènent les contenants 107 de produits depuis l'entrée E/sortie S de chaque allée du magasin de stockage 102 au poste de prélèvement 111 et réciproquement. Ces convoyeurs 114 à 118 sont pilotés par le système informatique de gestion centrale 113.

Le système informatique de gestion centrale 113 contrôle en outre les déplacements de chaque colis 121, chaque chariot 109, chaque élévateur 110a, 110b, 110c et chaque contenant 107 de produits. Le système informatique de gestion centrale 113 gère également la liste de commande associée à chaque colis et donc l'ordre des lignes de commande en fonction de l'emplacement de stockage des contenants 107 de produit, de la disponibilité des chariots et des élévateurs ainsi que des besoins en produits des différents colis à préparer qui se succèdent au poste de prélèvement 111. Ceci a pour but d'optimiser tous les déplacements et les temps de préparation des colis et d'assurer la synchronisation entre l'arrivée d'un colis en préparation et les contenants des produits correspondants au poste de prélèvement 111 (les échanges étant effectués par radio).

Le système élévateur comprend trois élévateurs indépendants 110a, 110b, 110c, pour chacune des allées 104a, 104b, 104c, 104d.

L'élévateur central de chariot (également appelé navette) 110b comprend une plateforme qui a pour rôle de transporter un chariot autonome 109 vide d'un niveau à un autre niveau de l'allée 104a. Comme mentionné auparavant, chaque niveau de l'allée 104a est équipé de voies de roulement pour permettre le déplacement de chariots autonomes qui déplacent, déposent ou reprennent les marchandises entreposées sur les différentes étagères.

À l'extrémité des étagères de stockage 105 de l'allée 104a où se situe l'élévateur central 110b, chaque étagère possède, sur chacun de ses niveaux, une zone d'échange ou tampon 105a, 105c destinée au chargement (zone 105c) ou au déchargement (zone 105a) des contenants 107. Ces zones de chargement ou de déchargement 105a, 105c comprennent, par exemple, trois emplacements indépendants 150, 151, 152 (la taille de chacune des zones correspondant sensiblement à la taille d'un emplacement de stockage) équipés de convoyeurs comprenant des rouleaux libres à axes horizontaux entraînés en rotation. En d'autres termes, à chaque niveau de l'allée 104a, une zone de déchargement 105a est associée à une zone de chargement 105c.

Toujours à la même extrémité des étagères de l'allée 104a, de chaque côté de l'élévateur central 110b, sont prévus deux élévateurs latéraux de produits 110a, 110c équipés chacun d'un convoyeur 153a, 153c respectivement, à rouleaux libres par exemple, qui peuvent chacun transporter un ou deux contenants simultanément.

Le premier élévateur de produits 110a est dédié aux sorties des contenants 107 du magasin de stockage 102 et le second élévateur de produits 110c est dédié aux entrées des contenants 107 dans le magasin de stockage 102. Les deux élévateurs de produits 110a, 110c desservent les différents niveaux de l'allée 104a et en particulier le ou les niveaux d'entrée E et/ou de sortie S du magasin 102 qui permet(tent) les échanges de contenants 107 entre le magasin de stockage 102 et l'ensemble 112 de convoyeurs.

On notera enfin que le système de l'invention comprend un convoyeur annexe 119 pour le réapprovisionnement du magasin 102 et l'évacuation des contenants 107 vides. Ce convoyeur annexe 119 est placé à une extrémité du convoyeur 114, à proximité du poste de prélèvement 111. Bien entendu, le système pourra être réapprovisionné par d'autres moyens, par exemple en prévoyant un élévateur à l'autre extrémité des allées, lequel élévateur serait en connexion avec un convoyeur de réapprovisionnement.

Les emplacements de stockage du magasin possèdent une profondeur plus ou moins importante, leur permettant de recevoir un, deux (double-profondeur) ou plusieurs produits (multi-profondeur).

Les chariots sont équipés d'un système de préhension des contenants de produits, par exemple celui décrit dans le brevet FR 2 915 977 déposée par la demanderesse, qui ne peut être mis en oeuvre que dans le cas d'un stockage en simple profondeur. Dans une alternative, les chariots sont équipés d'un système de préhension mettant en oeuvre deux bras télescopiques, une telle technique étant particulièrement adaptée au stockage multi-profondeur et bien connue de l'homme du métier.

### 6. 2 Déplacement des chariots sur les voies de roulement

Dans le cadre de l'invention, les chariots comprennent un moteur électrique destiné à entraîner quatre roues permettant aux chariots de se déplacer sur les voies de roulement. Le moteur électrique d'un chariot est alimenté par des lignes conductrices associés aux voies de roulement.

Dans le mode de réalisation décrit, une ligne conductrice reliée électriquement à une source d'énergie électrique (cette ligne est donc une ligne d'alimentation) est disposée parallèlement à la voie de roulement située à chaque niveau de rangement d'une allée, sur toute la longueur de la voie de roulement. Cette ligne d'alimentation comprend trois conducteurs (phase, neutre et terre). La plateforme de chaque élévateur de chariot comprend également une voie de roulement et une ligne d'alimentation (avec trois conducteurs) reliée électriquement à une source d'énergie électrique.

Le déplacement d'un chariot sur les voies de roulement est assuré en équipant chaque chariot avec des collecteurs de courants (des frotteurs par exemple) en contact permanent avec les lignes d'alimentation. On comprend donc que lorsqu'un chariot se trouve sur l'élévateur de chariot 110b ou sur une voie de roulement du rayonnage, chaque collecteur de courant du chariot est en contact avec une ligne d'alimentation, ce qui permet d'alimenter le moteur du chariot et d'entraîner en rotation les roues du chariot.

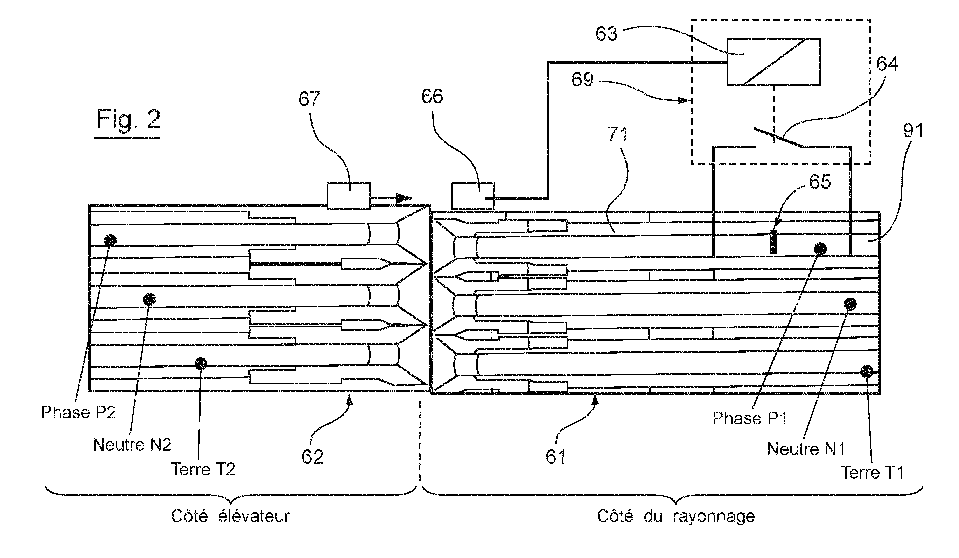

La figure 2 illustre le schéma électrique du principe de l'invention selon un mode de réalisation particulier.

On a représenté sur cette figure 2 un tronçon 61 de ligne d'alimentation disposé le long d'une voie de roulement d'un rayonnage et un tronçon 62 de ligne d'alimentation de l'élévateur de chariot 110b lorsque ce dernier est situé dans le prolongement de la voie de roulement du rayonnage. Trois conducteurs de phase, de neutre et de terre (P₁ N₁ T₁ ; P₂ N₂ T₂) respectivement, sont situés dans chaque tronçon 61, 62 de ligne d'alimentation. Chaque tronçon 61, 62 de ligne d'alimentation est relié à une borne de tension de l'alimentation électrique (non représentée), qui fournit une tension de 230V par exemple. On interpose, de préférence, entre les collecteurs de courant et le moteur de chaque chariot un convertisseur délivrant une tension constante de 24V au moteur.

Selon l'invention, à l'extrémité de la ligne d'alimentation située à proximité de l'élévateur de chariots 110b, on prévoit qu'une portion 71 d'un conducteur, la phase P₁ en l'occurrence dans l'exemple illustré, est isolée électriquement de la portion restante 91 du conducteur P₁. Cette portion ou zone 71 n'est pas, par défaut (c'est-à-dire lors des cycles de prise et dépose de contenants par le chariot desservant ce niveau, ou lorsque le chariot est à l'arrêt sur les voies de roulement), alimentée électriquement.

En d'autres termes, on « coupe » le conducteur P₁ de la ligne d'alimentation 61 de façon à ménager une portion 71 non alimentée de ligne d'alimentation 61, dite extrémité de sécurité, qui permet l'arrêt du chariot, ou du moins l'arrêt de l'alimentation électrique de son moteur, lorsque celui-ci pénètre cette portion 71. Cette coupure est mise en oeuvre par un isolant électrique 65 placée entre les portions 71 et 91.

La longueur de cette portion 71 de conducteur isolée, correspondant à la longueur maximale de freinage d'un chariot, est choisie en fonction de la vitesse maximale et de la masse du chariot. De préférence, cette longueur est légèrement supérieure à la distance d'arrêt du chariot lorsque celui-ci se déplace à pleine vitesse et que la source d'énergie électrique est coupée.

Cependant, la portion 71 de la phase P₁ est reliée à l'autre partie 91 de la phase P₁ de la ligne d'alimentation 61 par l'intermédiaire d'un relais 69 dont le contact électrique 64 est, par défaut, ouvert.

La continuité électrique entre la portion 71 et le reste de la ligne peut être rétablie par l'intermédiaire du relais 69, lequel est piloté par une bobine 63, qui est elle-même sollicitée par une cellule réceptrice 66 montée à l'extrémité du rayonnage.

La cellule réceptrice 66 ne peut envoyer une consigne de fermeture du contact 64 au relais 69 que lorsqu'elle reçoit (et uniquement dans ce cas là) un signal lumineux d'un émetteur 67 monté sur la plateforme de l'élévateur 110b.

La portion 71 isolée électriquement du conducteur 91 attenant est en dehors des limites de circulation des chariots lorsque ces dernières effectuent leurs cycles standards de prise/dépose des contenants de produits (les déplacements des chariots sont limités entre les zones de chargement/déchargement 105a, 105c des contenants et l'autre extrémité de la voie de roulement). Par conséquent, lors de ces cycles, chaque chariot est en permanence alimenté électriquement.

Après acquittement d'une mission, le chariot peut attendre, si nécessaire, en bout d'allée (mais toujours entre les limites décrites ci-dessus) la présence de l'élévateur de chariot 110b pour être ensuite emmené par ce dernier jusqu'à un niveau dans lequel le chariot s'engagera pour prélever un contenant.

A la réception d'une commande par le système informatique de gestion centrale 113, l'élévateur central de chariot 110b peut charger un chariot selon le principe suivant :
- quel que soit son point de départ, l'élévateur 110b va se déplacer (en montant ou en descendant) vers le niveau sur lequel le chariot est en attente ;
- à proximité dudit niveau, l'élévateur 110b (et donc sa plateforme) décélère, puis s'immobilise ;
- l'émetteur 67 de la plateforme transmet un signal lumineux à destination de la cellule réceptrice 66 située sur ledit niveau du rayonnage ;
- à la réception du signal, la cellule réceptrice 66 commande la bobine 63 du relais 69 qui commande la fermeture du contact 64. Le tronçon 71, précédemment isolé, est relié électriquement au tronçon 91 et l'ensemble de la ligne d'alimentation 61 est conducteur ;
- le système informatique de gestion centrale 113 donne l'ordre au chariot de se déplacer vers la plateforme. Le chariot peut se déplacer jusqu'à la plateforme puisque la totalité du rail d'alimentation 61 est alimenté électriquement. La distance séparant la plateforme de la voie de roulement est choisie de façon à empêcher tout arrêt intempestif du chariot entre la plateforme et la voie.

Une fois le chariot chargé sur la plateforme de l'élévateur 110b, l'émetteur 67 cesse d'émettre et l'élévateur110b peut se déplacer.

Le processus de transfert d'un chariot positionné sur la plateforme de l'élévateur de chariot 110b à destination d'une voie de roulement est mis en oeuvre selon le même principe.

On comprend donc que si un chariot venait à s'égarer ou bien si le système informatique de gestion centrale 113 perdait le contrôle d'un chariot, ce dernier dans sa lancée sortirait des limites autorisées lors des cycles de prise/dépose des contenants de produits. Dès lors que le chariot entrerait dans la zone 71 non alimentée, les collecteurs de courants du chariot seraient en contact avec une ligne d'alimentation non alimenté qui ne permettrait plus au chariot de se déplacer et qui provoquerait l'arrêt du chariot.

C'est la plateforme de l'élévateur qui alimente et qui provoque la continuité électrique entre les portions 71 et 91 du conducteur de la ligne d'alimentation 61 (par le biais d'un relais dans l'exemple illustré). Une fois cette continuité électrique mise en oeuvre, le chariot peut avancer sur la voie de roulement le long cette extrémité de sécurité 71 et passer du rayonnage vers l'élévateur 110b.

On dissocie donc le fonctionnement du chariot dans les rayonnages (lors des cycles de prise/dépose des contenants de produits) du passage du chariot sur la plateforme de l'élévateur de chariot 110b.

Bien entendu, le signal transmis par l'émetteur 67 placé sur la plateforme de l'élévateur 110b peut être de toute nature et non pas uniquement lumineux.

De même, le relais peut être substitué par tout autre élément connu de l'homme de l'art qui remplit la même fonction de commutation dans le cadre de l'invention.

Ainsi, dans une alternative, un galet est monté sur la plateforme de l'élévateur de chariot 110b et actionne un contacteur qui provoque la continuité électrique entre les portions 71 et 91 du conducteur de la ligne d'alimentation 61.

Dans une autre alternative, il n'y pas de relation entre l'élévateur de chariot 110b et le rayonnage. En d'autres termes, ce n'est pas l'élévateur de chariot 110b qui commande la continuité électrique entre les portions 71 et 91 du conducteur de la ligne 61, mais le système informatique de gestion centrale 113 qui commande le contact 64.

La solution de l'invention est ainsi moins coûteuse et complexe puisqu'elle permet de s'affranchir de la butée mécanique.

La conception du système de l'invention permet de réduire le nombre de pièces mécaniques en mouvement, et donc le nombre d'incidents potentiels, mais aussi de réduire les temps d'assemblage du système de l'invention.

### 6.3 Variantes

Le mode de réalisation décrit ci-dessus met en oeuvre une seule ligne d'alimentation par voie de roulement, une telle ligne d'alimentation comprenant trois conducteurs électriques (phase, neutre, terre).

On peut imaginer mettre en oeuvre l'invention pour un nombre différent de lignes d'alimentation (un ou plus) par voie de roulement et pour une répartition différente des conducteurs (deux conducteurs dans une première ligne et l'autre dans la deuxième ligne par exemple).

Dans le cas d'une alimentation en courant continu, on peut mettre en oeuvre deux lignes d'alimentation par exemple.

Bien évidemment, le chariot comprend autant de frotteurs électriques que de lignes d'alimentation par voie de roulement.

L'invention peut être mise en oeuvre en utilisant au moins une ligne d'alimentation magnétique associée à chaque voie de roulement et apte à alimenter sans contact le moteur d'un chariot.

On peut également s'affranchir du conducteur de terre et n'avoir que deux conducteurs (phase, neutre), dans la mesure où le rayonnage est relié à la terre.

L'entrepôt peut également comporter des voies de roulement reliant un magasin à un autre ou reliant différentes zones opérationnelles de l'entrepôt à un magasin ou entre elles, le chariot pouvant circuler sur ces voies en étant alimenté par au moins une ligne d'alimentation disposée le long de chaque voie. Le système d'arrêt des chariots de l'invention peut être mis en oeuvre en plusieurs emplacement de ces voies, selon les besoins.

Le système d'arrêt des chariots de l'invention peut également être mis en oeuvre dans une autre application (que la préparation de colis), appelée « bufferisation » en anglais (c'est-à-dire « stockage tampon ») avant expédition, gérée par un système de pilotage central et ne nécessitant pas ou peu d'intervention humaine.

Dans ce cadre, le magasin de stockage est dédié au stockage de colis préparés en amont (par un système automatisé de préparation de colis par exemple) et sert en quelque sorte de zone tampon.

Ainsi, des colis préparés à un poste de prélèvement situé en amont du magasin de stockage sont transférés dans ce magasin par le biais d'un ou plusieurs élévateurs de produits (pouvant charger un ou deux contenants par exemple) situées à une première extrémité amont du magasin en association avec un élévateur de chariot. Ces colis peuvent alors être stockés dans le magasin pendant une durée pouvant aller de quelques heures à quelques jours. L'extrémité aval du magasin est équipée d'un ou plusieurs élévateurs de produits (pouvant charger un ou deux contenants par exemple) qui, en association avec les chariots des allées du magasin et un élévateur de chariot, permettent, lorsqu'un camion de livraison est présent en aval du magasin par exemple, de décharger ces colis du magasin et de les transférer vers le camion de livraison.

Les chariots pourraient en outre être utilisées pour déplacer des produits sur de longues distances (utilisation en moyen de transport), notamment dans des environnements particuliers (entrepôts à température négative par exemple, ce qui nécessite dans ce cas des adaptations du chariot (roues, lubrifiants, etc)).

## Revendications

1. Système de stockage automatisé (100) comprenant au moins une voie de roulement desservant des emplacements de stockage (106), la mise en place et le prélèvement de produits (107) à l'intérieur des emplacements de stockage (106) étant assurés par l'intermédiaire d'au moins un chariot (109) se déplaçant sur ladite au moins une voie de roulement grâce à des moyens d'entraînement alimentés par au moins une ligne d'alimentation en énergie (61) associée à ladite voie de roulement et reliée à une source d'énergie électrique,
**caractérisé en ce qu'**au moins une première portion (71) de la ligne d'alimentation (61), associée à une première portion d'extrémité de la voie de roulement, est reliée ou non à ladite ou à une autre source d'énergie électrique par des premiers moyens de commutation (63, 64, 69), de sorte que, quand le chariot (109) est présent dans la première portion d'extrémité de la voie de roulement : si la première portion (71) de la ligne d'alimentation (61) est alimentée en énergie, les moyens d'entraînement sont alimentés et peuvent entraîner le chariot (109) en déplacement, sinon les moyens d'entraînement ne sont pas alimentés et ne peuvent pas entraîner le chariot (109) en déplacement.

2. Système selon la revendication 1, **caractérisé en ce que** ledit chariot (109) comprend des moyens de freinage qui sont actifs lorsqu'ils ne sont pas alimentés par ladite au moins une ligne d'alimentation (61), de sorte que, quand le chariot (109) est présent dans la première portion de la voie de roulement : si la première portion (71) de la ligne d'alimentation (61) est alimentée en énergie, les moyens de freinage sont inactifs, sinon les moyens de freinage sont actifs.

3. Système selon la revendication 1 ou 2, **caractérisé en ce que** des moyens isolants (65) sont situés entre ladite première portion (71) de ladite ligne d'alimentation (61) et une deuxième portion (91) de ladite ligne d'alimentation (61) associée à une deuxième portion de la voie de roulement, et **en ce que** lesdites première et deuxième portions (71, 91) de ladite ligne d'alimentation (61) sont reliées entre elles par lesdits premiers moyens de commutation (63, 64, 69).

4. Système selon l'une des revendications 1 à 3, comprenant au moins un ensemble de rangement (103) comprenant une allée (104a, 104b, 104c, 104d) donnant accès, d'un côté ou de chaque côté, à une étagère de stockage (105) constituée d'une pluralité de niveaux de rangement superposés, chaque niveau étant subdivisé en emplacements de stockage (106) , une voie de roulement équipant chaque niveau de rangement, **caractérisé en ce que** ledit au moins un ensemble de rangement (103) comprend des moyens élévateurs de chariot (110b) pouvant amener ledit au moins un chariot (109) d'un niveau à un autre, lesdits premier moyens de commutation (63, 64, 69)étant commandés au moins en partie par des moyens de pilotage (67) situés au moins en partie sur lesdits moyens élévateurs de chariot (110b).

5. Système selon l'une des revendications 1 à 4, **caractérisé en ce que** lesdits premier moyens de commutation (63, 64, 69) sont pilotés au moins en partie par des moyens de gestion centrale (113) dudit système.

6. Système selon la revendication 4 ou 5, **caractérisé en ce que**, pour au moins un niveau de rangement donné, les moyens de pilotage comprennent des moyens d'émission (67) d'un signal de commande, situés sur lesdits moyens élévateurs (110b), et des moyens de détection (66) dudit signal de commande, situés à proximité de la première portion d'extrémité de la voie de roulement dudit niveau de rangement donné, lesdits moyens d'émission (67) étant activés lorsque les moyens élévateurs de chariot (110b) sont situés sensiblement en face dudit niveau de rangement donné.

7. Système selon la revendication 6, **caractérisé en ce que** la première portion (71) de ligne d'alimentation (61) est alimentée en énergie pendant un délai prédéterminé après que les moyens élévateurs de chariot (110b) ne sont plus situés sensiblement en face dudit niveau de rangement donné.

8. Système selon l'une des revendications 4 à 7, **caractérisé en ce que** ledit au moins un ensemble de rangement (103) comprend des moyens élévateurs de chariot (110b) situés à chaque extrémité de l'allée,
et **en ce que**, pour au moins un niveau de rangement donné, une deuxième portion de la ligne d'alimentation associée à une deuxième portion d'extrémité de la voie de roulement, est reliée ou non à ladite ou à une autre source d'énergie électrique par des deuxièmes moyens de commutation.

9. Système selon la revendication 8, **caractérisé en ce que**, pour au moins un niveau de rangement donné, deux chariots (109) sont prévus sur ledit niveau de rangement donné.

10. Système selon la revendication 9, **caractérisé en ce qu'**une troisième portion de la ligne d'alimentation, associée à une troisième portion de la voie de roulement, est reliée ou non à ladite ou à une autre source d'énergie par des troisième moyens de commutation, ladite troisième portion de la voie de roulement étant située entre les première et deuxième portions d'extrémité de la voie de roulement.
